# EUROPEAN PATENT SPECIFICATION

(11) **EP 0 708 797 B1**
(45) Date of publication and mention of the grant of the patent: **04.02.1998**
(21) Application number: 94921482.9
(22) Date of filing: 14.07.1994
(51) Int. Cl.: C08K 5/00, C08L 27/12

(54) **HIGH PURITY FLUOROELASTOMER COMPOSITIONS**
HOCHREINE FLUORELASTOMERZUSAMMENSETZUNGEN
COMPOSITIONS FLUOROELASTOMERES A PURETE ELEVEE

(30) Priority: 16.07.1993 US 93239
(43) Date of publication of application: 01.05.1996
(73) Proprietor: E.I. DU PONT DE NEMOURS AND COMPANY, Wilmington Delaware 19898 (US)
(72) Inventor: LEGARE, John, Michael, Newark, DE 19711-8505 (US); THOMAS, Eric, William, Hudson, OH 44236-2340 (US)
(74) Representative: von Kreisler, Alek, Dipl.-Chem.
(86) International application number: US9407593
(87) International publication number: WO9502634

(56) References cited:
- EP-A- 0 365 053

## Description

### BACKGROUND OF THE INVENTION

Fluoroelastomers such as those described in U. S. -A- 3,682,872, 4,281,092 and 4,592,784 have achieved outstanding commercial success, and are used in a wide variety of applications in which unusually severe environments are encountered, including high temperatures and aggressive chemicals. Particularly successful have been those fluoroelastomers based on vinylidene fluoride copolymerized with hexafluoroproylene and, optionally, tetrafluoroethylene. A wide variety of crosslinking mechanisms has been proposed for such fluoroelastomers. One particularly desirable fluoroelastomer is that described in Moore U. S. -A-5,032,655, containing both bromine and iodine in the basic polymer structure; while particularly desirable perfluoroelastomers are described in Apotheker et al, U. S.-A-4,035,565.

The manufacture of electronic components, such as semiconductor devices, presents unusually stringent requirements for sealing components used in such processing. Previous fluoroelastomers and curing systems have not met this need.

### SUMMARY OF THE INVENTION

The instant invention provides fluoroelastomer compositions which can be effectively used for stringent, high purity applications.

Specifically, the instant invention provides a fluoroelastomer composition comprising:
(A) at least one peroxide-curable elastomeric fluoropolymer, and, based on the elastomeric fluoropolymer;
(B) 0.1-5.0 phr organic acid acceptor;
(C) 0.1-5.0 phr organic peroxide;
(D) 0.1-10.0 phr coagent for the organic peroxide; and
(E) 1-50 phr fluoropolymer micropowder filler;
the composition being free from carbon fillers and extractable metals and metal compounds are present in quantities of less than 500 ppb [extractable from one AS568A size -214 o-ring (total surface area 9935 cm²/1.540 sq. in.; estimated contact surface area 8935 cm²/1.385 sq. in) in ultrapure deionized water or H₂SO₄:H₂O₂ for 1 month at 80 °C per 100 ml of test fluid].

### DETAILED DESCRIPTION OF THE INVENTION

A wide variety of elastomeric fluoropolymers can be used in the compositions of the present invention, including both perfluoropolymers as well as hydrogen-containing fluoropolymers. The fluoropolymers contain moieties to render the polymer crosslinkable by use of peroxide curing systems.

Hydrogen-containing fluoropolymers which can be used in this invention are generally based on vinylidene fluoride (VF₂) monomer. The most common hydrogen-containing fluoropolymers are copolymers of VF₂ with hexafluoropropylene (HFP) and optionally tetrafluoroethylene (TFE). However, the use of other fluoromonomers and of monomers that do not contain fluorine is well known. Other monomers that can be used include chlorotrifluoroethylene (CTFE), hydrocarbon olefins such as ethylene (E) or propylene (P), and perfluoro (alkyl vinyl) ether (PAVE) having the formula CF₂ = CFO(CF₂CFXO)ₙR_{f} wherein X is F or CF₃, n is O-5, and R_{f} is a perfluoroalkyl group of 1 - 6 carbon atoms. A preferred PAVE for use in hydrogen-containing fluoroelastomers is perfluoro(methyl vinyl) ether (PMVE). Fluoropolymers incorporating such monomers include TFE/VF₂/PMVE, E/TFE/PMVE, TFE/P and TFE/P/VF₂.

Still other perfluoropolymers which can be used in the compositions of the present invention include those prepared from TFE and one or more PAVE. Minor portions of the TFE can be replaced by other perhaloolefins, such as CTFE. PAVE preferred for use in this invention include (PMVE), perfluoro(propyl vinyl) ether (PPVE), and certain PAVE for which n is not zero in the formula above.

Perfluoropolymers which can be used in the present invention are prepared primarily from two or more perfluorinated monomers such as tetrafluoroethylene (TFE) or other perfluoroolefins, and perfluoro (alkyl vinyl) ether wherein the alkyl group contains 1 to 5 carbon atoms. Typical of such reactants are perfluoro (methyl vinyl) ether (PMVE) and perfluoro (propyl vinyl) ether (PPVE). These monomers are typically used in conjunction with a comonomer which facilitates crosslinking. Small concentrations of monomers which are not perfluorinated can also be used. Normally, such monomers are employed to obtain desirable crosslinking characteristics and may be present in concentrations of up to 3 mole % . Examples of such monomers include bromotetrafluorobutene, bromotrifluoroethylene, vinylidene fluoride and monomers containing cyano groups.

Alternatively or additionally, chain transfer agents that are not perfluorinated can be used in the polymerization reaction to introduce desirable fragments into the polymer for curing purposes, and are considered cure site moieties in the context of the present invention. Such agents include di-iodo compounds that result in bound iodine in the polymer, commonly at the end of the molecule.

Representative peroxide-curable fluoropolymers which can be used in the present compositions are described in Apotheker et al., U. S. -A- 4,035,565; Tatemoto et al., U. S.-A-4,243,770; Albin, U. S.-A- 4,564,662; Arcella et al., U. S.-A-4,745,154; Moore, U. S.-A- 4,948,852; Moore, U. S.-A-4,973,633; Logothetis, U.S.-A-4,948,853 ; Breazeale, U.S. -A-4,281,092, Finlay, U.S.-A-4,529,784, Logothetis, U.S.-A- 4,972,038 and Arcella et al., U. S.-A-5,177,148.

The fluoroelastomer compositions of the present invention further include 0.1 - 5.0 phr of an organic acid acceptor.

A wide variety of acid acceptors can be used; generally the acid acceptor is a strong organic base, having a pKa of at least 10, and preferably at least 12. One such base that has been found to be particularly satisfactory is 1,8-bis-(dimethylamino) napthalene, commercially available from Aldrich Chemical Company as Proton Sponge. Another particularly satisfactory acid acceptor is octadecyl amine, commercially available from Akzo Chemicals, Inc. as Armeen® 18-D. Still other organic acid acceptors which can be used are the oxiranes described in MacLachlan, U. S. -A-4,271,275. Particularly satisfactory are glycidyl resins that are a condensation product of bisphenol A and epichlorohydrin. Organo-silanes such as 3-glycidoxypropyl trimethoxy silanes can also be used. The organic base acts as an accelerator, process aid and acid scavaging agent. It has been found to improve the physical characteristics of the cured fluoroelastomer. It also has been found to substantially reduce the anionic extractables, particularly fluoride, of the cured fluoroelastomer. 0.1 to 5.0 phr of organic acid acceptor are used, and from 0.1 to 1.0 phr have been found to be particularly satisfactory.

The fluoroelastomer compositions of the present invention further comprise 0.1 - 5.0 phr of at least one organic peroxide. A wide variety of organic peroxides can be used, provided the organic peroxide is of the alkyl type. One organic peroxide that has been found to be particularly satisfactory is 2, 5-dimethyl-2,5-di (t-butylperoxy) hexane, commercially available from Atochem, Inc. as Lupersol® 101. The organic peroxide has been found to be particularly satisfactory in concentrations of 1-3 phr. While some forms of the organic peroxide are available on an inert carrier, such as Luperco® 101-XL (45% active ingredient), the concentrations indicated are based on 100% active organic peroxide.

The fluoroelastomer compositions of the present invention further comprise organic coagent to aid in the crosslinking reaction. In general, the coagent is present in an amount between 0.1 and 10 phr, and preferably between 2 and 5 phr. A wide variety of organic coagents can be used, including triallyl isocyanurate, trimethylallyl isocyanurate and trimethylolpropane trimethacrylate, of which trimethylallyl isocyanurate has been found to be particularly satisfactory. Triallyl isocyanurate and trimethylallyl isocyanurate are available from the DuPont Company as Diak #7 and Diak #8. Trimethylolpropane trimethacrylate is commercially available from the Sartomer Company as Saret® 350.

The fluoroelastomer composition further comprises from 1 to 50 phr of a fluoropolymer micropowder filler, and preferably at least 2 phr of the filler.

The fluoropolymer filler used in the present fluoroelastomer compositions is any finely divided, easily dispersed plastic fluoropolymer that is solid at the highest temperature utilized in fabrication and curing of the fluoroelastomer composition. By solid, it is meant that the fluoroplastic, if partially crystalline, has a crystalline melting temperature above the elastomeric fluoropolymer processing temperature, and, if amorphous, has a glass transition temperature above the elastomeric fluoropolymer processing temperature. Such finely divided, easily dispersed fluoropolymers are commonly called micropowders. Micropowders are ordinarily partially crystalline polymers.

Micropowders that can be used in the compositions of this invention can include those based on the group of polymers known as tetrafluoroethylene (TFE) polymers. This group includes hompolymers of TFE (PTFE) and copolymers of TFE with such small concentrations of copolymerizable modifying monomers that the resins remain non-melt-fabricable (modified PTFE). The modifying monomer can be, for example, hexafluoropropylene (HPF), perfluoro(propyl vinyl) ether (PPVE), perfluorobutyl ethylene, chlorotrifluoroethylene, or other monomers that introduces side groups into the molecule. The concentration of such modifiers is usually less than 1 mole%.

The PTFE resins used in the compositions of this invention include both those derived from suspension polymerization and from emulsion polymerization. The group of TFE polymers also includes melt-fabricable copolymers of TFE with sufficient concentrations of one or more copolymerizable monomer to reduce the melting point significantly below that of PTFE. Such copolymers generally have melt viscosity in the range 0.5-60 x 10³ Pa•s, but viscosities outside this range are known. Comonomers with TFE can include perfluoroolefins and perfluoro(alkyl vinyl) ethers, for example, and these are preferred. Among perfluorinated comonomers, HFP and PPVE are most preferred.

High molecular weight PTFE used for micropowder is usually subjected to ionizing radiation to reduce molecular weight. This facilitates grinding and enhances friability if the PTFE is produced by the suspension polymerization process, or suppresses fibrillation and enhances deagglomeration if the PTFE is produced by the emulsion polymerization process. It is also possible to polymerize TFE directly to PTFE micropowder by appropriate control of molecule weight in the emulsion polymerication process. Morgan, in U. S.-A-4,879,362, discloses a non-melt-fabricable, non-fibrillating TFE copolymer produced by the emulsion (dispersion) polymerization process that can be used in selected high purity fluoroelastomer compositions. This polymer forms platelets on shear blending into elastomeric compositions, instead of fibrillating. Morgan & Stewart, in U. S.-A- 4,904,726, disclose the utility of Morgan's polymer in blends with elastomers, demonstrating benefit to mechanical properties, notably tear strength. If the viscosity of the host fluoroelastomer of the high purity composition of this invention is high, Morgan's polymer may increase viscosity to unacceptable levels and a different micropowder should be selected.

Melt fabricable TFE copolymers such as FEP (TFE/HFP copolymer) and PFA (TFE/PPVE copolymer) can also be used in the high purity fluoroelastomer compositions of this invention, provided they satisfy the constraint on melting temperature with respect to fluoroelastomer processing temperature. These copolymers can be used in powder form as isolated from the polymerization medium, if particle size is acceptable, or can be ground to suitable particle size starting with stock of larger dimensions.

In general, at least 2 phr, based on the peroxide-curable elastomeric fluoropolymer, of the fluoropolymer filler is used, and generally less than 50 phr. Preferably, 5-35 phr of the fluoropolymer filler is used in the present compositions. Those fluropolymer fillers commercially available from the DuPont Company as Teflon® MP-1500 and Teflon® MP-1600 fluoroadditives have been found to particularly satisfactory in the present invention.

The compositions can further include additives to enhance processability, as will be evident to those skilled in the art. The compositions of the present invention can further comprise at least 1 phr of plasticizer, and generally less than 20 phr. In general, less than 10 phr are preferred. Plasticizers which have been found particularly satisfactory include perfluoropolyethers.

In accordance with the present invention, it has been found that satisfactory performance for fluoroelastomers in certain applications requires the absence or particularly low concentrations of certain components. Specifically, the fluoroelastomer compositions must be free from metals and metal compounds. Representative of such metals and metal compounds are those for which results are reported in the Examples and Comparative Examples. The concentrations of total metallic extractables should be less than 500 parts per billion (ppb), and particularly desirable performance characteristics are obtained when the total metallic extractables is less than 200 ppb.

Fluoroelastomer compositions of the present invention are particularly suited for use in wet chemical environments, and exhibit significantly lower metallic, anionic and TOC extractables than previously known compositions. As result, they are especially suited for use in semiconductor wet chemical process applications as well as in other types of high purity applications.

The following test procedures are used to determine extractables:

### Experimental Procedure

Extraction vessels (250 ml Teflon® PFA 440-HP jars with screw lids) were filled with ultrapure deionized water, capped with a screw lid and placed in a nitrogen-purged oven at 80°C for 16 hours. The deionized water was discarded after each rinse. The above procedure was repeated five times to effectively precondition the extraction vessels. The extraction vessels were then filled with the appropriate test fluid and placed in an oven for 72 hours @ 80°C. The test fluid was discarded and the procedure repeated. The following high purity grade chemicals were used as the extraction test fluids in this study.
(a) 18 mega-ohm Ultrapure Deionized Water (UPDI)
(b) "Piranha" - 3:1 (v/v) of 96% Sulfuric Acid and 30% Hydrogen Peroxide

O-ring test specimens were first preconditioned by rinsing with ultrapure deionized water, followed by soaking in ultrapure deionized water for 20 minutes in a polypropylene container in an ultrasonic bath. Preconditioned extraction vessels were filled with 100 mls of the appropriate test fluid. One AS568A size -214 o-ring (total surface area 9935cm² 1.540 sq. in.; estimated contact surface area 8935cm² 1.385 sq. in. ) was placed in the test fluid and the extraction vessel capped. The o-ring was immersed in the test fluid for 1 month at 80°C. Two o-ring samples were tested per each compound example listed in Tables II and VI. Three blanks (test fluid only) were also run per test fluid.

After immersion, the o-rings were removed from the extraction vessel and rinsed with ultrapure deionized water to remove residual test fluid. The extract was analyzed for metallic, anionic and total organic carbon extractables using a number of different analytical techniques. Metallic extractables analyses were performed using ICP-MS (Inductively Coupled Plasma-Mass Spectroscopy). Calcium and Iron analyses were performed using GFAA (Graphite Furnace Atomic Absorption). Anionic and cationic extractable analyses were performed using Ion Chromatography. TOC (Total Organic Carbon) analyses were performed using a TOC analyzer. Test results are listed in Tables III, IV, VII and VIII. All test results have been blank corrected. Results are expressed as ppb (parts per billion) leached in 100 mls of test fluid @ 80°C for 1 month from 1 o-ring.

No carbon filler is added to the present compositions, and the compositions exhibit a low Total Organic Carbon content.

The present compositions can be used in a wide variety of applications which require exceptionally high purity. Typical of such applications are those found in the electronic, optical, medical and pharmaceutical industries. The combination of physical properties, curing characteristics, and purity found in the present compositions has heretofore not been known.

In the following examples, compounds of the fluoroelastomer with other specified ingredients were prepared on a two-roll rubber mill with the rolls heated to a temperature not greater than about 60°C, depending on the specific polymer being processed. In the mill mixing process, the fluoroelastomer polymer is first introduced to the roll nip alone, milled until a band is formed and the polymer is well blended, and milled until a rolling bank is maintained on the mill. Additives, including Teflon® fluoroadditive, which were previously weighed out, were then added to the nip and the resulting composition milled until uniform.

The compounded blends were converted to a form suitable for physical property testing by compression molding into either dumbells or o-rings. Curing and postcuring followed procedures outlined in the various examples. Specimens for physical property testing were prepared from die-cut sheet stock as called for by the test methods summarized in Table I.

**TABLE I**

| **PHYSICAL TEST METHODS** | | |
|---|---|---|
| **Symbol** | **Physical Property** | **Test Method** |
| M100 | Modulus @ 100% Elongation | ASTM D412 |
| Tb | Tensile strength @ break | ASTM D412 |
| Eb | Elongation @ break | ASTM D412 |
| H | Durometer A Hardness | ASTM D-2240 |
| CS | Compression Set | ASTM D-395 & ASTM D-1414 |

### COMPARATIVE EXAMPLE A

Perfluoroelastomer Polymer A is an elastomeric copolymer of TFE, PMVE and 8-CNVE in which 8-CNVE is curesite monomer perfluoro-(8-cyano-5-methyl-3, 6-dioxa-1-octene). It was prepared generally as described in U. S.-A-4,281,092. Polymer A was compounded with carbon black, tetraphenyltin and other ingredients as listed in Table II, molded/postcured and tested according to procedures described above. O-ring test specimens were presscured for 20' @ 210°C, then postcured in a nitrogen atmosphere in a circulating oven at 90°C for 6 hours, followed by a uniform transition to 305°C over 10 hours and in turn followed by 26 hours @ 305°C. Physical property test results are listed in Table II. "Wet" chemical extraction test results are listed in Tables III and IV. The results listed in Table II are based on the average of three test specimens. The wet chemical extraction test results listed in Tables III and IV are based on the average of two samples tested.

### COMPARATIVE EXAMPLE B

Perfluoroelastomer Polymer B is an elastomeric copolymer of TFE, PMVE and VF2 in which VF2 is the curesite monomer vinylidene fluoride. It was generally prepared as described in U. S.-A-4,529,784. Polymer B was compounded with carbon black, zinc oxide and other ingredients as listed in Table II, molded/postcured and tested according to the procedures described above. O-ring test specimens were presscured for 30' @ 210°C, then postcured in a nitrogen atmosphere in a circulating oven by first increasing the temperature slowly from room temperature to 260°C over a 40 hour period followed by postcuring for 8 hours @ 260°C. Physical property test results are summarized in Table II. "Wet" chemical extraction test results are summarized in Tables III and IV. The results in Table II are based on the average of three test specimens. The wet chemical extraction test results in Table III and IV are based on the average of two samples tested.

### EXAMPLES 1 - 3

Perfluoroelastomer Polymer C is an elastomeric copolymer of TFE, PMVE and BTFB in which BTFB is curesite monomer 4-bromo-3, 3, 4, 4-tetrafluorobutene. It as prepared generally as described in U. S.-A- 4,035,065. Polymer C was compounded with trimethylallyl isocyanurate (TMAIC) and other ingredients as listed in Table II, molded/postcured and tested according to procedures described above. O-ring test specimens were prepared from die cut sheet stock. Specimens were presscured for 10' @ 177°C, then postcured in a nitrogen atmosphere in a circulating oven by first increasing the temperature slowly from room temperature to 232°C over a 40 hours period followed by postcuring for 8 hours @ 232°C. Physical property test results are listed in Table II. "Wet" chemical extraction test results are listed in Table III and Table IV. The results listed in Table II are based on the average of three test specimens. The wet chemical extraction test results listed in Table III and IV are based on the average of two samples tested.

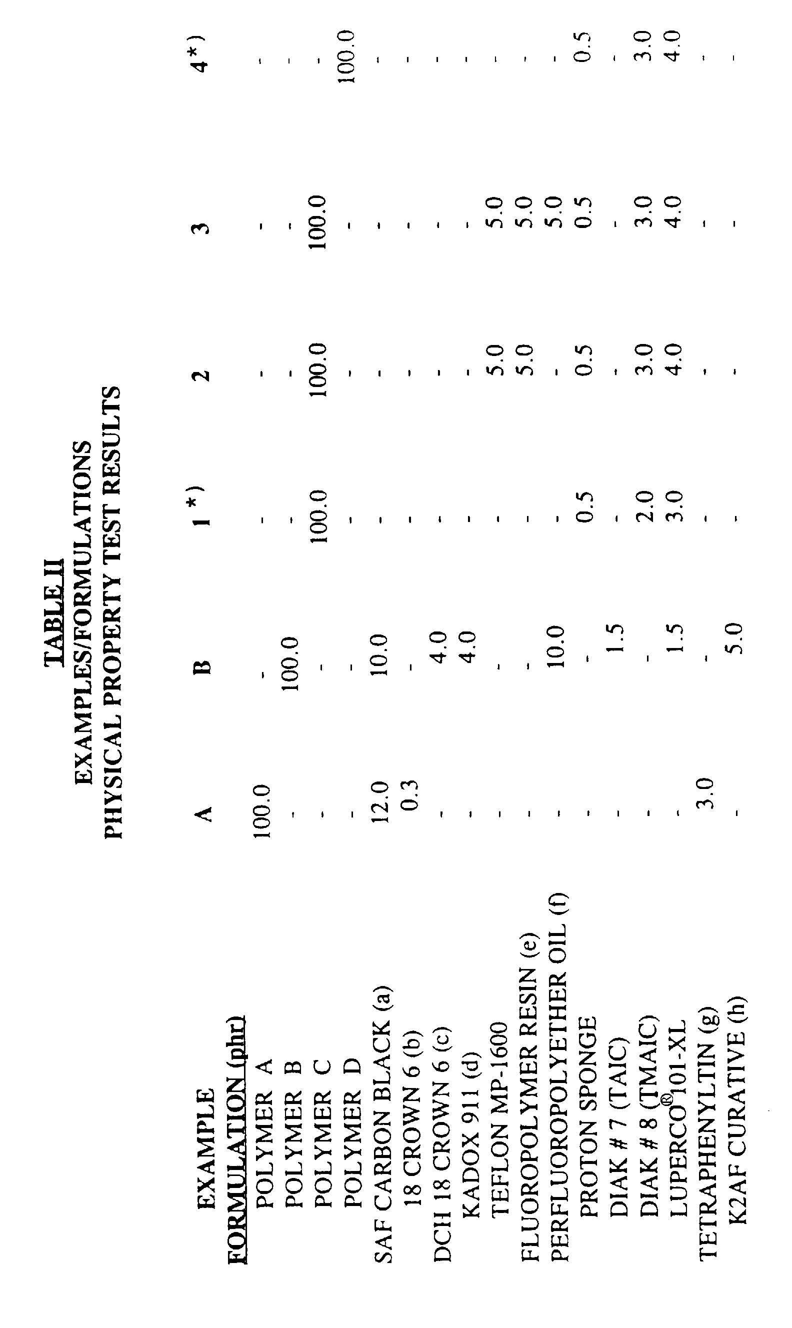

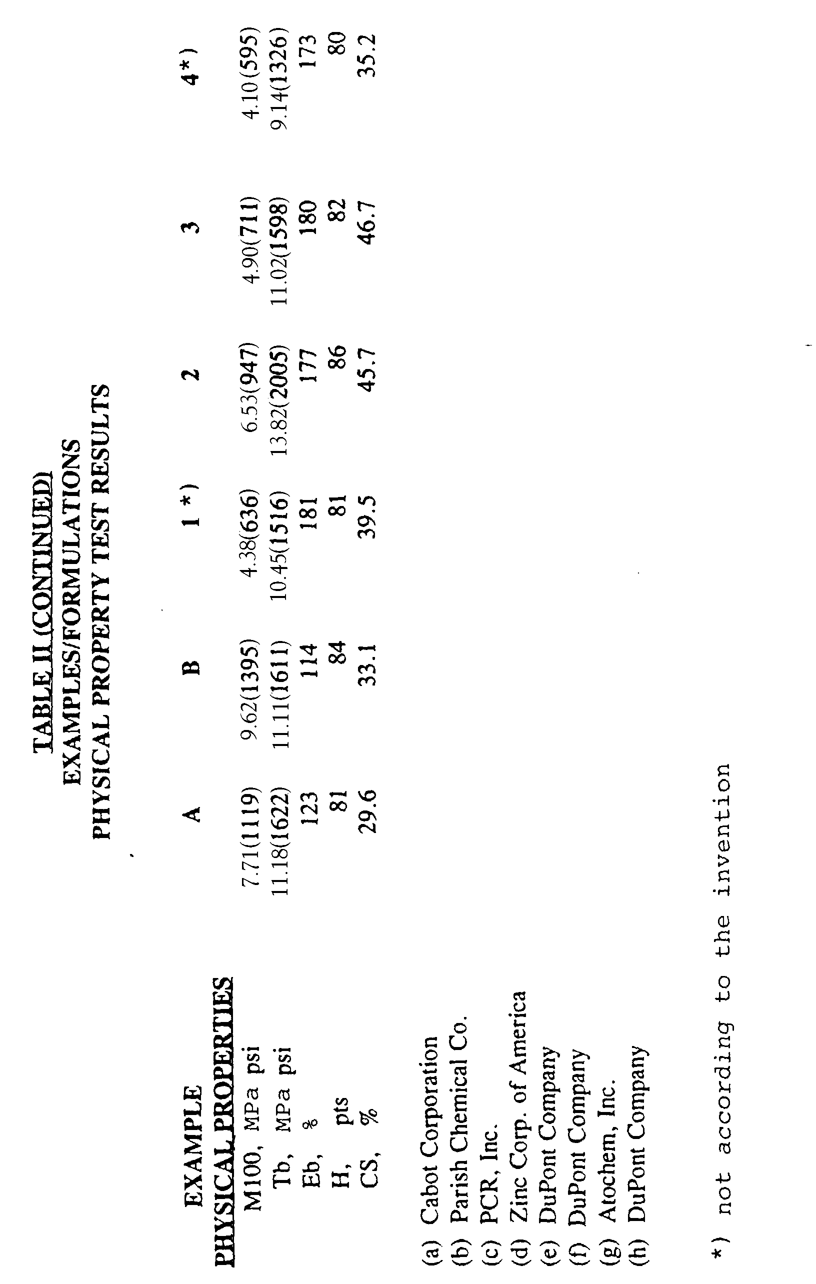

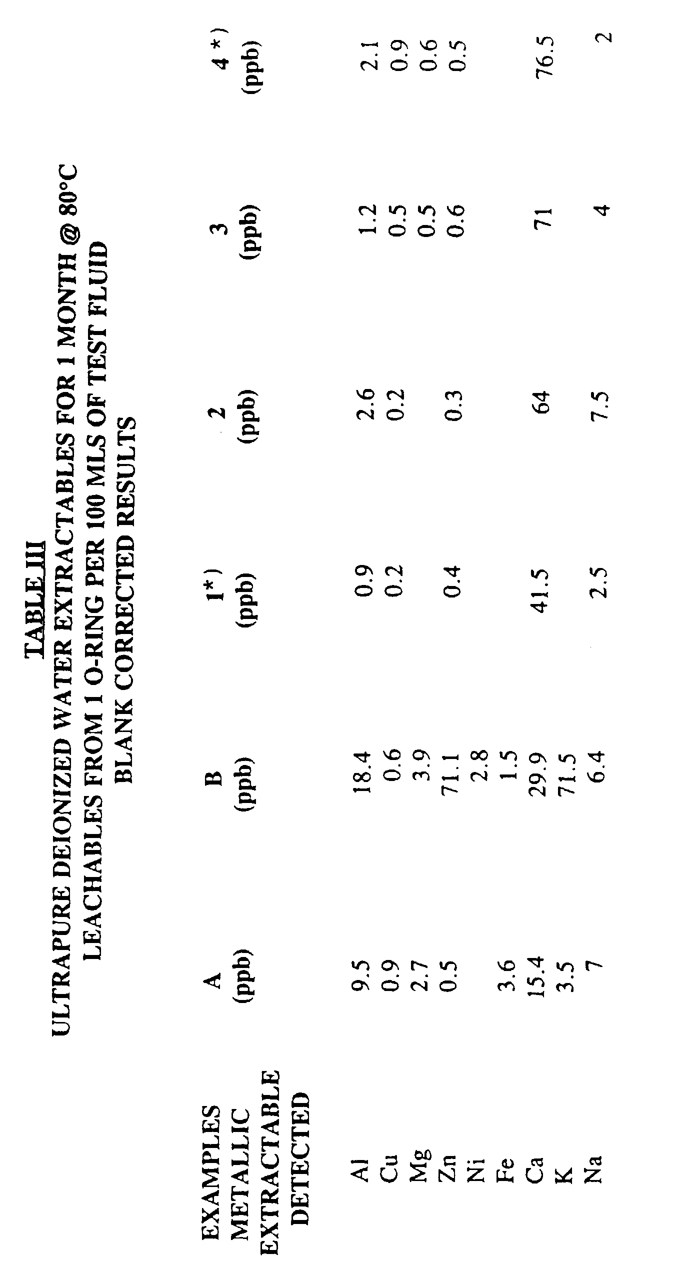

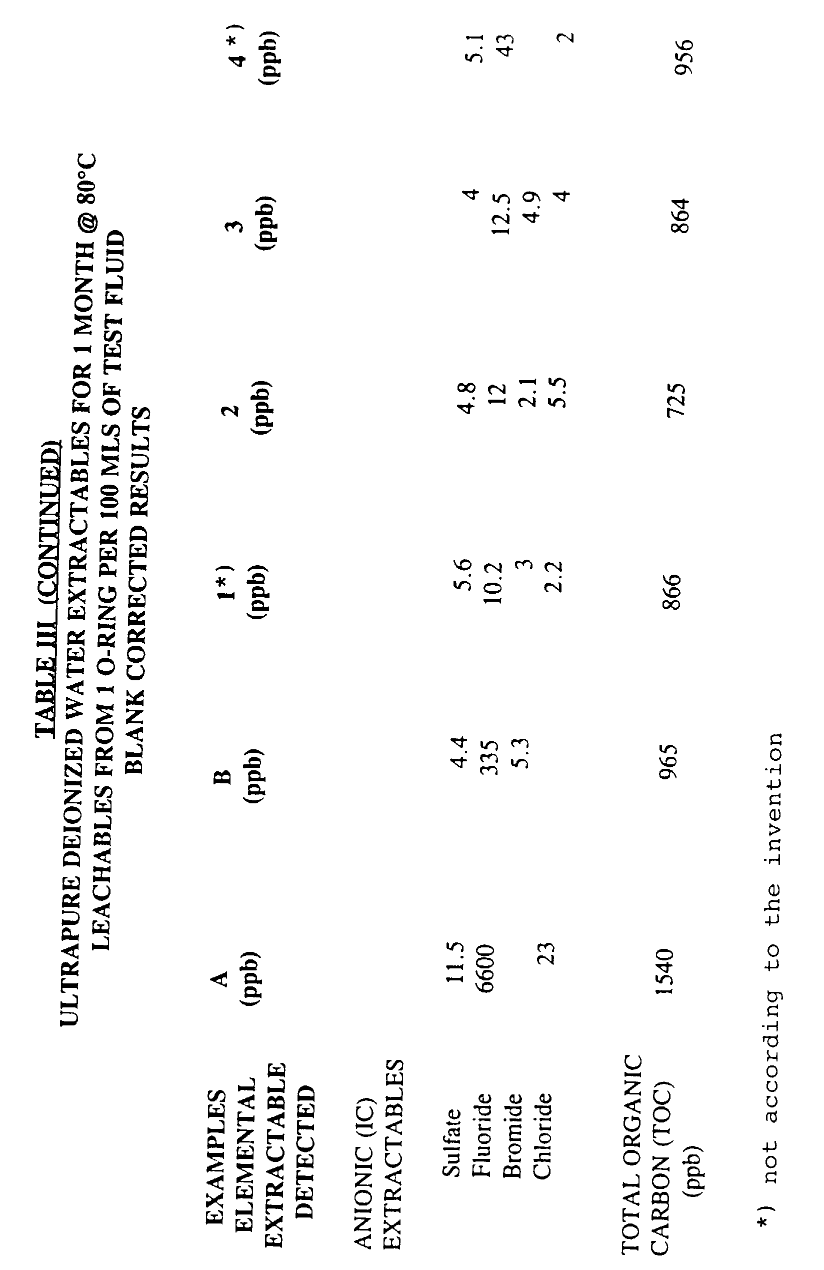

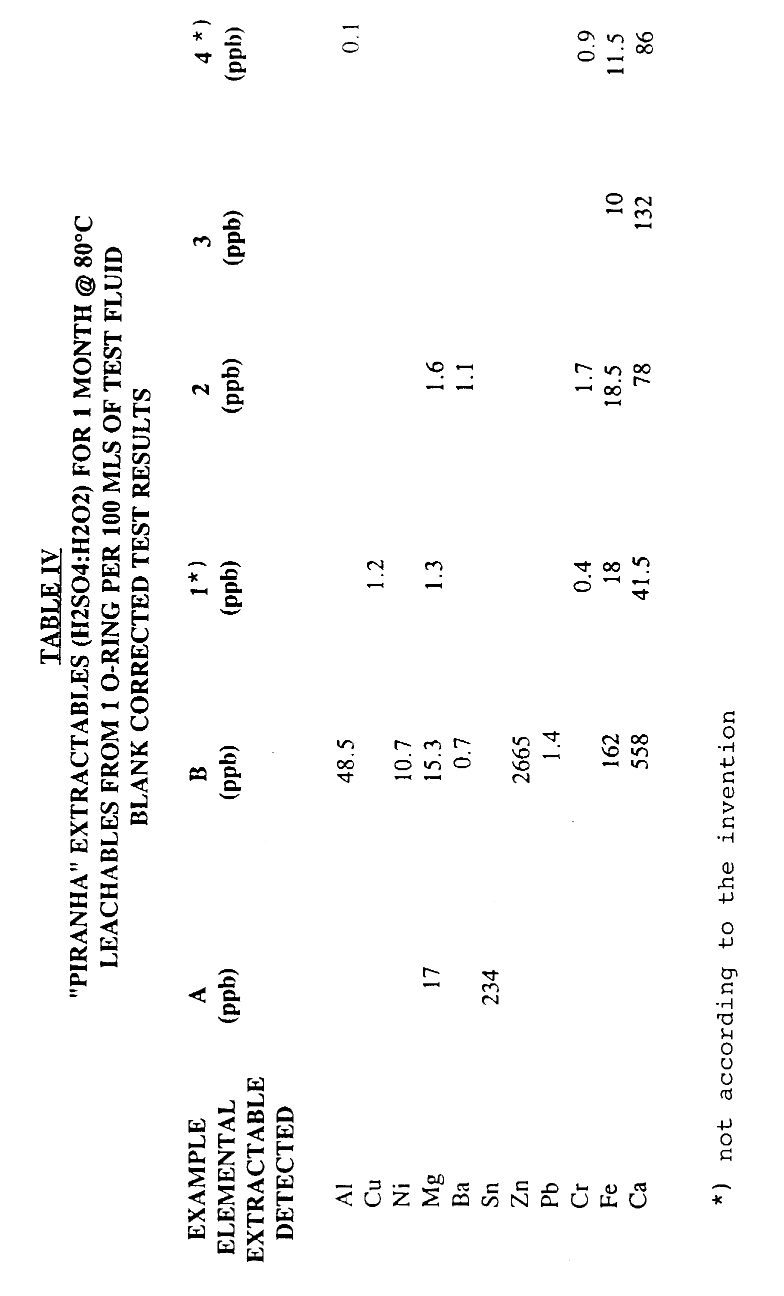

### EXAMPLE 4 (not according to the invention)

Perfluoroelastomer Polymer D is an elastomeric copolymer of TFE, PMVE and perfluoro-(8-cyano-5-methyl-3, 6-dioxa-1-octene) (8-CNVE) with iodo moieties present on the ends of some of the polymer chains. It as prepared generally as described in U. S.-A-4,972,038. Polymer D was compounded with trimethylallyl isocyanurate (TMAIC) and other ingredients as listed in Table II, molded/postcured and tested according to procedures described above. O-ring test specimens were prepared from die cut sheet stock. Specimens were presscured for 10' @ 177°C, then postcured in a nitrogen atmosphere in a circulating oven by first increasing the temperature slowly from room temperature to 232°C over a 40 hour period followed by postcuring for 8 hours @ 232°C. Physical property test results are listed in Table II. "Wet" chemical extraction test results are listed in Tabled III and IV. The results listed in Table II are based on the average of three test-specimens. The wet chemical extraction test results in Tables III and IV are based on the average of two samples tested.

### EXAMPLE 5 (not according to the invention)

A peroxide-curable elastomeric fluoropolymer E was prepared having a composition of 38% PMVE, 35% VF2, 26% TFE, 1% BTFB, and 0.18% Iodine. Mooney viscosity was measured as ML-10 (121°C) = 25.

A curable fluoroelastomer composition was prepared by mixing the following ingredients on a two-roll mill whose rolls were heated to about 25°C: 100 parts by weight of fluoropolymer E, 3 parts triallyl isocyanurate (TAIC), 2 parts "Lupersol" 101 peroxide (2, 5-dimethyl-2, 5-di(t-butyl peroxy) hexane), and 0.5 parts octadecyl amine. The composition was cured, and the cure characteristics were measured with an oscillating disc rheometer (ODR) at a cure time of 12 minutes at 177°C according to ASTM D 2084 (3 deg. arc). The time required to obtain 90% of the cure state as determined by t'90 was 2.4 minutes. Test samples were press-cured for 10 minutes at 177°C and post-cured in a circulating air oven for 24 hours at 200°C. Stress-strain properties were determined to be
100% modulus, M₁₀₀ = 1.2 MPa
tensile strength at break, T_{B} = 3.2 MPa
elongation at break, E_{B} = 186% Hardness was determined according to ASTM D 2240 as Durometer A = 52 points. Compression set, measured on O-rings according to ASTM D 1414 in air, was 41 % after 70 hours at 200°C. The results are reported in Table V.

**TABLE V**

| **Curing of TFE/VF2/PMVE Fluoroelastomer** | |
|---|---|
| **EXAMPLE** | **5** |
| Fluoropolymer E | 100 |
| Diak #7 | 3 |
| Armeen® 18D | 0.5 |
| Lupersol® 101 | 2 |

| **STOCK PROPERTIES** | |
|---|---|
| **ODR 100 @ 177°C 3°Arc, 12 Minute Motor** | |
| M-L J(lbs-in) | 0.847 (7.5) |
| MH J(lbs-in) | 7.05 (62.4) |
| Ts2 (min) | 1.0 |
| Tc50 (min) | 1.6 |
| Tc90 (min) | 2.4 |

| **MDR 2000 @177°C 0,5° Arc, 6 Minute Motor** | |
|---|---|
| M-L J(lbs-in) | 0.068 (0.6) |
| MH J(lbs-in) | 1.87 (16.6) |
| Ts-2 (min:sec.) | 0:33 |
| Tc50 (min:sec.) | 0:42 |
| Tc90 (min:sec.) | 1:07 |

| **VULCANIZATE PROPERTIES** | |
|---|---|
| Press Cure: 10 Min./177°C | Post Cure: 24 Hrs./200°C |

| **Physical Properties @ R,T, - Original** | |
|---|---|
| 50% Modulus, MPa | 0.9 |
| 100% Modulus, MPa | 1.2 |
| Tensile Strength, MPa | 3.2 |
| Elongation @ Break, % | 186 |
| Hardness, Duro A, Pts. | 52 |
| Specific Gravity | 1.79 |

| **Compression Set. Method B** | |
|---|---|
| 22 Hrs./200°C, % | 21.3 |
| 70 Hrs. /200°C, % | 41.4 |

### EXAMPLES 6 and 7

Fluoropolymer E of Example 5 was used in Example 6. For Example 7, a peroxide-curable fluoropolymer F was prepared from 50% VF2, 29% HFP, 20% TFE, 0.6% BTFB, and 0.2% Iodine. Mooney viscosity was measured as ML-10 (121°C) = 25.

A curable fluoroelastomer composition was prepared by mixing the following ingredients on a two-roll mill whose rolls were heated to about 25°C: 100 parts by weight fluoropolymer E, 3 parts triallyl isocyanurate (TAIC), 4 parts "Luperco" 101-XL peroxide and 0.5 parts octadecyl amine. Cure characteristics of the composition were measured with an oscillating disc rheometer (ODR) at a cure time of 12 minutes at 177°C according to ASTM D 2084 (3deg.arc). The time required to obtain 90% of the cure state as determined by t'90 was 3.4 minutes. Test samples were press-cured for 10 minutes at 177°C and post-cured in a circulating air oven for 24 hours at 200°C. Stress-strain properties were determined according to ASTM D 412 as 100% modulus, M₁₀₀=1.4 MPa; tensile strength at break, T_{B} =5.2 MPa; elongation at break, E_{B} = 186 % . Hardness was determined according to ASTM D 2240 as Durometer A =52 points. Compression set, measured on O-rings according to ASTM D 1414 in air, was 41 % after 70 hours at 200°C. The results are reported in Table VI.

### COMPARATIVE EXAMPLE C

A representative vinylidene fluoride/hexafluoropropylene Fluoropolymer G crosslinked with bisphenol cure system containing divalent metal was prepared so that a comparison could be made with the peroxide-curable fluoroelastomers shown in Table VI. This was prepared in the same manner and cure conditions as those in Example 6 and results are shown in Tables VI, VII and VIII.

### COMPARATIVE EXAMPLE D

Fluoropolymer E containing an inorganic pigment was prepared so that a comparison could be made with the peroxide-curable fluoroelastomers shown in Table VI. This was prepared in the same manner and cure conditions as those in Example 6 and results are shown in Tables VI, VII and VIII.

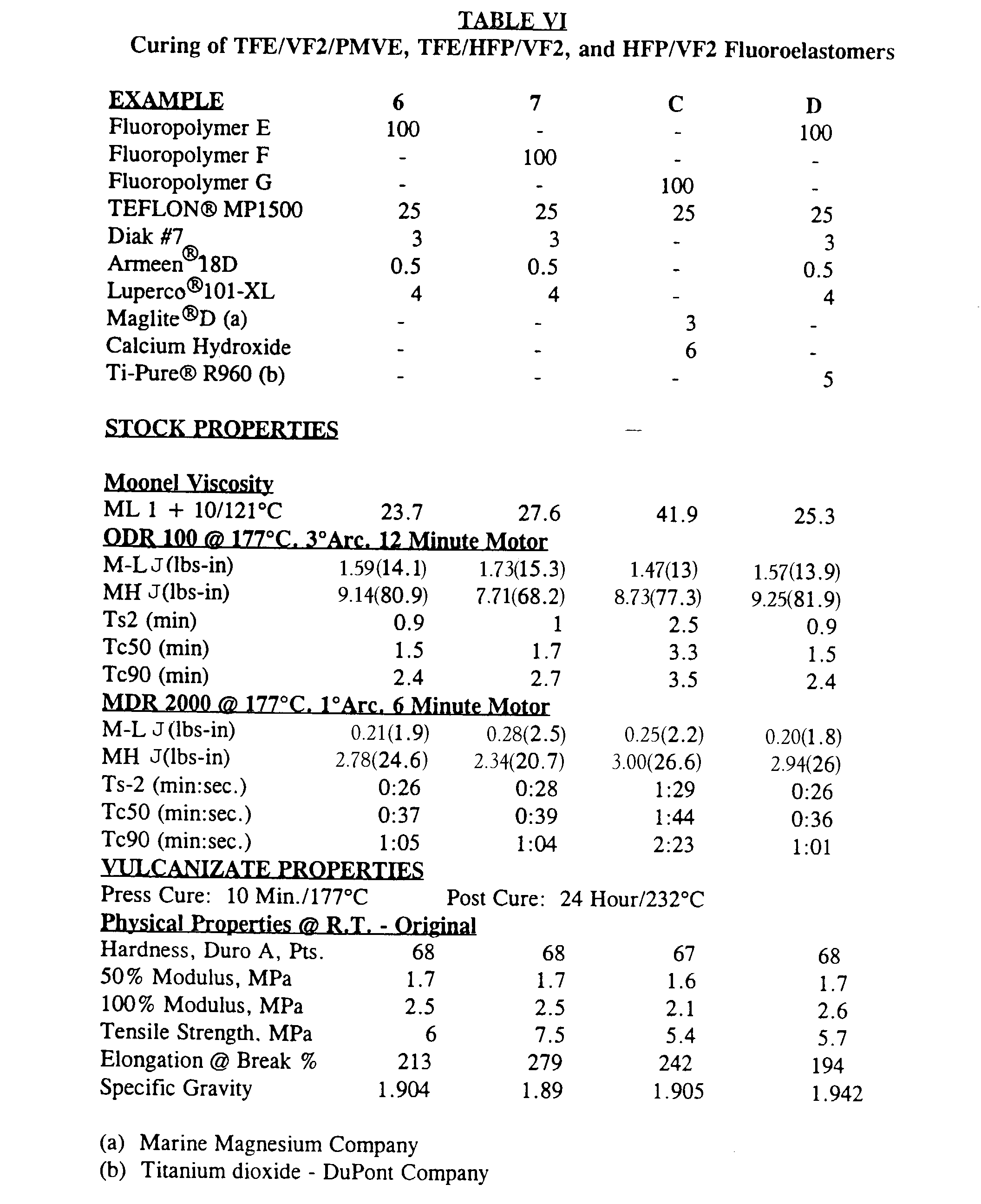

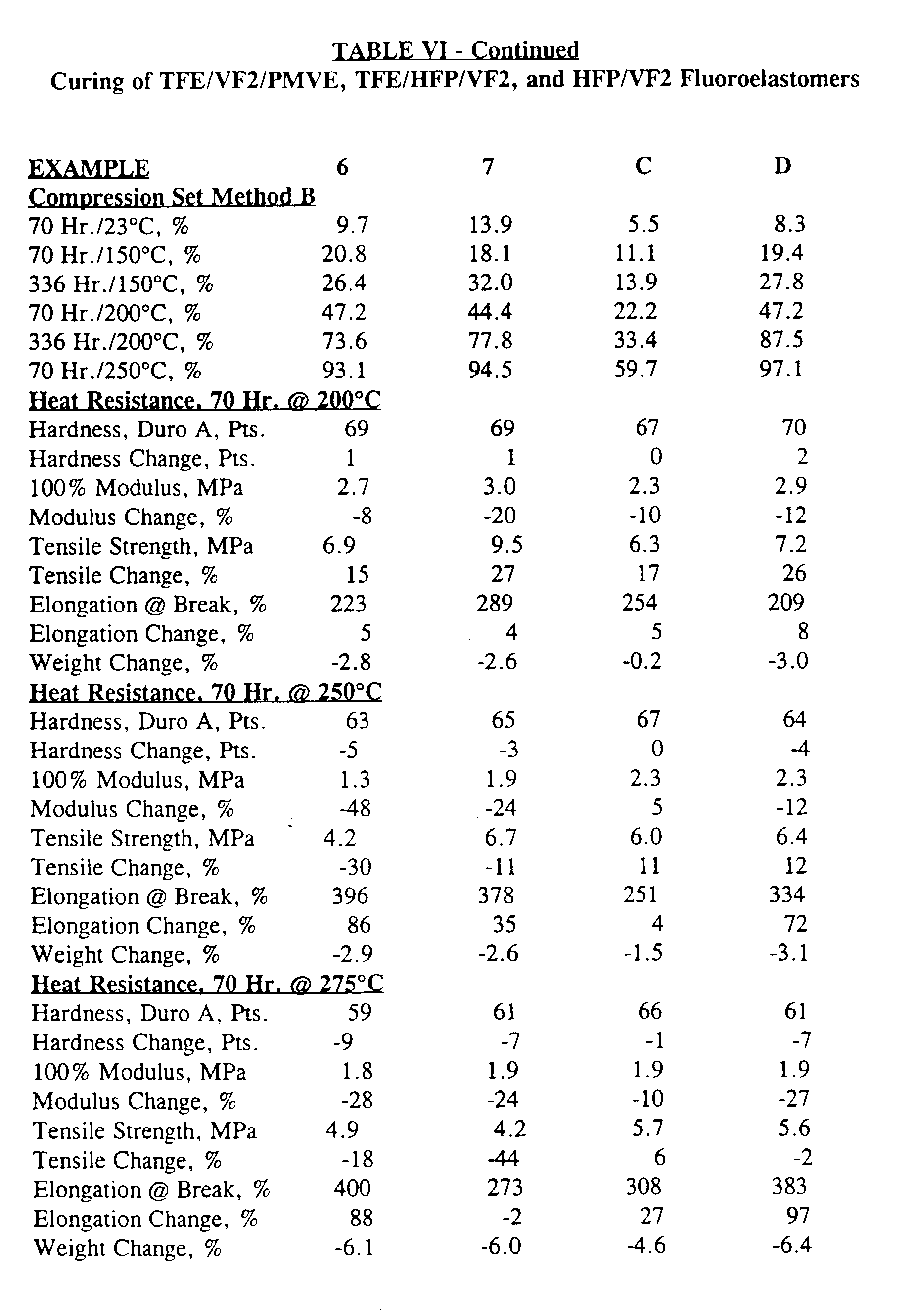

**TABLE VII**

| **Ultrapure Deionized Water (UPDI) @ 80°C for 1 month Blank Corrected Results ICP-MS/GF-AA/IC/TOC** | | | | |
|---|---|---|---|---|
| **Metallic Extractable Detected** | | | | |
| **Example** | **6** | **7** | **C** | **D** |
| Al | 1.3 | 2.6 | 4.5 | 2.3 |
| Cu | 0.1 | 0.8 | 0.4 | 0.5 |
| Mg | 1.9 | 1.7 | 61.2 | 1.6 |
| Zn | 1.1 | 0.5 | 0.2 | 0.4 |
| Ba | | 13.5 | 23.6 | |
| Fe | 12.4 | 0.9 | 0.9 | 0.9 |
| Ca | 157.4 | 43.9 | >400 | 43.9 |
| K | 3.3 | 2.4 | 8 | 2.4 |
| Na | 4.9 | 5.6 | 16.5 | 5.6 |
| Total Metallic Extractables | 182.4 | 71.9 | >515.3 | 57.6 |

| **Anionic/Cationic Extractables (IC)** | | | | |
|---|---|---|---|---|
| Bromide | 20.7 | 13.5 | 5.1 | 24 |
| Chloride | | | 0.6 | |
| Fluoride | 236.4 | 17 | 268 | 30.4 |
| Phosphate | 2.6 | | 3.1 | 2.6 |
| Sulfate | 24.2 | 9 | 25 | 24.2 |
| | | | | |
| **Total Organic Carbon (TOC)** | 1750 | 1910 | 2650 | 2000 |

**TABLE VIII**

| **Piranha (H2SO4:H2O2) @ 80°C for 1 month Blank Corrected Results ICP-MS/GF-AA** | | | | |
|---|---|---|---|---|
| **Metallic Extractable Detected** | | | | |
| **Example** | **6** | **7** | **C** | **D** |
| Al | 3.2 | 10.6 | 7.8 | 2.2 |
| Cu | 3.4 | | | |
| Mg | 1.4 | 2 | 195.7 | 1.1 |
| Ba | | 13.3 | 33.7 | |
| Cr | 2.1 | 1.7 | 2.4 | 1.4 |
| Fe | 12.5 | 12.4 | 30.5 | 19 |
| Ca | 49.1 | 38.6 | 572 | 46.9 |
| Na | 6.6 | 5.1 | 10.1 | 5.1 |
| K | 0.4 | 1.9 | 2.9 | |
| Ti | | | | 71 |
| | | | | |
| **Total Metallic Extractables** | 78.7 | 85.6 | 855.1 | 146.4 |

### RESULTS AND DISCUSSION

The test results shown above demonstrate the effect that various compound additives (metallic acid acceptors and crosslinking agents, elemental carbon fillers, inorganic pigments, etc.) have on performance in wet chemical environments. Of the fluoroelastomer compound examples tested Examples 2, 3 , 6 and 7 according to the invention, exhibit significantly lower metallic, anionic and TOC extractables in both ultrapure deionized water and in "piranha" vice Comparative Examples A through D. Comparative Example A exhibits high anionic and TOC extractables in ultrapure deionized water and high metallic (Tin) extractables in "piranha". The high Tin extractables in "piranha" can be directly attributed to the use of a metallic crosslinking catalyst in Comparative Example A. Comparative Example B exhibits high metallic (Zinc and Potassium) extractables in ultrapure deionized water and high metallic (Zinc) extractables in "piranha". The high Zinc extractables in both ultrapure deionized water and in "piranha" can be directly attributed to the use of a metallic oxide acid acceptor and metallic crosslinking agent in Comparative Example B.

Comparative Example C exhibits high metallic (Calcium) extractables in ultrapure deionized water and high metallic (Calcium and Magnesium) extractables in "piranha". This can be directly attributed to the use of both Calcium Hydroxide and Magnesium Oxide as acid acceptors/cure accelerators in Comparative Example C. Metallic oxides are typically used as acid acceptors in fluoroelastomer compounds. They serve primarily as "acid scavengers", absorbing hydrogen fluoride generated as a curing process byproduct. However, they can also serve as potential sources of extractables in wet chemical process environments. Comparative Example D exhibits high metallic (Titanium) extractables in "piranha". This can be directly attributed to the use of Titanium Dioxide as an inorganic pigment in Comparative Example D. Examples 1 through 7 have been specifically formulated for use in semiconductor wet chemical process applications. They avoid the use of metallic oxide acid acceptors and metallic crosslinking agents through the use of novel compounding techniques.

## Claims

1. A fluoroelastomer composition, comprising:
(A) at least one peroxide-curable elastomeric fluoropolymer, and, based on the elastomeric fluoropolymer;
(B) 0.1-5.0 phr organic acid acceptor;
(C) 0.1-5.0 phr organic peroxide;
(D) 0.1-10.0 phr coagent for the organic peroxide; and
(E) 1-50 phr fluoropolymer micropowder filler;
the composition being free from carbon fillers and extractable metals and metal compounds are present in quantities of less than 500 ppb [extractable from one AS568A size -214 o-ring (total surface area 9935 cm²/1.540 sq. in.; estimated contact surface area 8935 cm²/1.385 sq. in) in ultrapure deionized water or H₂SO:H₂O₂ for 1 month at 80 °C per 100 ml of test fluid].

2. A fluoroelastomer composition of Claim 1 wherein the fluoropolymer micropowder filler is present in an amount of at least 2 phr.

3. A fluoroelastomer composition of Claim 1 wherein the fluoropolymer micropowder filler consists essentially of a polymer of tetrafluoroethylene.

4. A fluoroelastomer composition of Claim 1 wherein the elastomeric fluoropolymer is a perfluoropolymer.

5. A fluoroelastomer composition of Claim 1 wherein the elastomeric fluoropolymer is a hydrogen-containing fluoropolymer.

6. A fluoroelastomer composition of Claim 1 wherein the fluoropolymer micropowder filler consists essentially of a copolymer of tetrafluoroethylene and perfluoro(propyl vinyl)ether.

7. A fluoroelastomer composition of Claim 0.1 wherein the fluoropolymer micropowder filler consists essentially of a copolymer of tetrafluoroethylene and hexafluoropropylene.

8. A fluoroelastomer of Claim 1 wherein the organic acid acceptor consists essentially of at least one oxirane.

9. A fluoroelastomer composition of Claim 0.1 wherein the organic acid acceptor consists essentially of 1,8-bis-(dimethylamino)naphthalene.

10. A fluoroelastomer composition of Claim 0.1 wherein the organic acid acceptor consists essentially of octadecyl amine.

11. A fluoroelastomer composition of Claim 1 further comprising at least 1 phr of plasticizer.

12. A fluoroelastomer composition of Claim 11 wherein the plasticizer consists essentially of perfluoropolyether.

13. A fluoroelastomer composition of Claim 1 . wherein the extractable metals and metal compounds are present in quantities of less than 200 ppb.

14. A fluoroelastomer composition of Claim 1 wherein the fluoroelastomer composition is free from inorganic compounds.

15. A cured article prepared from a composition of Claim 1.

## Patentansprüche

1. Fluorelastomer-Zusammensetzung, umfassend:
(A) wenigstens ein durch Peroxid härtbares, elastomeres Fluorpolymer, und, bezogen auf das elastomere Fluorpolymer;
(B) 0,1 - 5,0 phr eines organischen Säureakzeptors;
(C) 0,1 - 5,0 phr eines organischen Peroxids;
(D) 0,1 - 10,0 phr eines Hilfsmittels für das organische Peroxid und
(E) 1 - 50 phr eines Fluorpolymer-Mikropulver-Füll-stoffs;
wobei die Zusammensetzung frei von Kohlenstoff-Füllstoffen ist und extrahierbare Metalle und Metallverbindungen in Mengen von weniger als 500 ppb vorhanden sind [extrahierbar aus einem AS568A-Größe-214-O-Ring (Gesamt-Oberfläche 9935 cm²/1,540 sq.in.; geschätzte Kontaktfläche 8935 cm²/1,385 sq.in.) in ultrareinem, deionisiertem Wasser oder H₂SO₄:H₂O₂ 1 Monat lang bei 80 °C auf 100 ml Testfluid].

2. Fluorelastomer-Zusammensetzung nach Anspruch 1, wobei der Fluorpolymer-Mikropulver-Füllstoff in einer Menge von wenigstens 2 phr vorhanden ist.

3. Fluorelastomer-Zusammensetzung nach Anspruch 1, wobei der Fluorpolymer-Mikropulver-Füllstoff im wesentlichen aus einem Polymer von Tetrafluorethylen besteht.

4. Fluorelastomer-Zusammensetzung nach Anspruch 1, wobei das elastomere Fluorpolymer ein Perfluorpolymer ist.

5. Fluorelastomer-Zusammensetzung nach Anspruch 1, wobei das elastomere Fluorpolymer ein wasserstoffhaltiges Fluorpolymer ist.

6. Fluorelastomer-Zusammensetzung nach Anspruch 1, wobei der Fluorpolymer-Mikropulver-Füllstoff im wesentlichen aus einem Copolymer von Tetrafluorethylen und Perfluor(propylvinyl)ether besteht.

7. Fluorelastomer-Zusammensetzung nach Anspruch 1, wobei der Fluorpolymer-Mikropulver-Füllstoff im wesentlichen aus einem Copolymer von Tetrafluorethylen und Hexafluorpropylen besteht.

8. Fluorelastomer-Zusammensetzung nach Anspruch 1, wobei der organische Säureakzeptor im wesentlichen aus wenigstens einem Oxiran besteht.

9. Fluorelastomer-Zusammensetzung nach Anspruch 1, wobei der organische Säureakzeptor im wesentlichen aus 1,8-Bis(di-methylamino)naphthalin besteht.

10. Fluorelastomer-Zusammensetzung nach Anspruch 1, wobei der organische Säureakzeptor im wesentlichen aus Octadecylamin besteht.

11. Fluorelastomer-Zusammensetzung nach Anspruch 1, weiterhin umfassend wenigstens 1 phr eines Weichmachers.

12. Fluorelastomer-Zusammensetzung nach Anspruch 1, wobei der Weichmacher im wesentlichen aus Perfluorpolyether besteht.

13. Fluorelastomer-Zusammensetzung nach Anspruch 1, wobei die extrahierbaren Metalle und Metallverbindungen in Mengen von weniger als 200 ppb vorhanden sind.

14. Fluorelastomer-Zusammensetzung nach Anspruch 1, wobei die Fluorelastomer-Zusammensetzung frei von anorganischen Verbindungen ist.

15. Gehärteter Gegenstand, hergestellt aus einer Zusammensetzung von Anspruch 1.

## Revendications

1. Une composition d'élastomère fluoré, comprenant :
(A) au moins un polymère fluoré élastomère durcissable par un peroxyde et, sur la base du polymère fluoré élastomère :
(B) 0,1 à 5,0 pcc d'accepteur d'acide organique ;
(C) 0,1 à 5,0 pcc de peroxyde organique ;
(D) 0,1 à 10,0 pcc d'un agent auxiliaire du peroxyde organique ; et
(E) 1 à 50 pcc d'une charge consistant en micropoudre de polymère fluoré ;
la composition étant exempte de charges consistant en carbone et les métaux et composés métalliques extractibles sont présents en des quantités inférieures à 500 x 10⁻⁷ % [extractibles d'une bague torique AS568A taille -214, (surface totale : 9,935 cm² ; surface de contact estimée : 8,935 cm²) dans l'eau désionisée ultrapure ou H₂SO₄:H₂O₂ pendant 1 mois à 80°C pour 100 ml de liquide d'essai].

2. Une composition d'élastomère fluoré de la revendication 1, dans laquelle la charge consistant en micropoudre de polymère fluoré est présente en une quantité d'au moins 2 pcc.

3. Une composition d'élastomère fluoré de la revendication 1, dans laquelle la charge consistant en micropoudre de polymère fluoré est essentiellement constituée d'un polymère de tétrafluoréthylène.

4. Une composition d'élastomère fluoré de la revendication 1, dans laquelle le polymère fluoré élastomère est un polymère perfluoré.

5. Une composition d'élastomère fluoré de la revendication 1, dans laquelle le polymère fluoré élastomère est un polymère fluoré contenant de l'hydrogène.

6. Une composition d'élastomère fluoré de la revendication 1, dans laquelle la charge consistant en micropoudre de polymère fluoré est essentiellement constituée d'un copolymère de tétrafluoréthylène et de perfluoro(éther de propyle et de vinyle).

7. Une composition d'élastomère fluoré de la revendication 1, dans laquelle la charge consistant en micropoudre de polymère fluoré est essentiellement constituée d'un copolymère de tétrafluoréthylène et d'hexafluoropropylène.

8. Un élastomère fluoré de la revendication 1, dans lequel l'accepteur d'acide organique est essentiellement constitué d'au moins un oxiranne.

9. Une composition d'élastomère fluoré de la revendication 1, dans laquelle l'accepteur d'acide organique est essentiellement constitué de 1,8-bis(diméthylamino)- naphtalène.

10. Une composition d'élastomère fluoré de la revendication 1, dans laquelle l'accepteur d'acide organique est essentiellement constitué d'octadécylamine.

11. Une composition d'élastomère fluoré de la revendication 1, comprenant de plus au moins 1 pcc de plastifiant.

12. Une composition d'élastomère fluoré de la revendication 11, dans laquelle le plastifiant est essentiellement constitué de polyéther perfluoré.

13. Une composition d'élastomère fluoré de la revendication 1, dans laquelle les métaux et composés métalliques extractibles sont présents en des quantités inférieures à 200 × 10⁻⁷ %.

14. Une composition d'élastomère fluoré de la revendication 1, dans laquelle la composition d'élastomère fluoré est exempte de composés minéraux.

15. Un article durci préparé à partir d'une composition de la revendication 1.
